# EUROPEAN PATENT APPLICATION

(11) **EP 2 698 215 A1**
(43) Date of publication of application: **19.02.2014**
(21) Application number: 12180775.4
(22) Date of filing: 17.08.2012
(51) Int. Cl.: B21C 37/08, B23K 9/025, B23K 11/06, B23K 11/087, B23K 15/00, B23K 26/26, B23K 31/02, C22C 19/00

(54) **Method for manufacturing high temperature steam pipes**

(71) Applicant: Alstom Technology Ltd, 5400 Baden (CH)
(72) Inventor: Scarlin, Richard Brendon, 20226 Speoncato (FR)

(57) **Abstract**

A method of manufacturing live steam pipes or reheat pipes for a steam power plant is described including the steps of rolling a billet of a Ni.base alloy into a flat sheet, bending the sheet into a tube and welding together the longitudinal confronting edges of the sheet to form a pipe sufficiently long-term corrosion resistant and creep-resistant under exposure to steam above a temperature of 650° C.

## Description

This invention relates generally to a method of manufacturing live steam pipes or reheats pipes for a steam power plant, particularly for ultra-high temperature steam plants and pipes manufactured accordingly.

### Background

As described in the United States patent no. 6,753,504, the efficiency of a thermal machine, for example in a steam power plant, can be improved considerably by increasing the working temperature, for example to over 650° C. The rotors of the high-temperature steam turbines used in a power plant of this type, for working temperatures of over 650° C, should be produced from creep-resistant nickel-base alloys. However, nickel-base alloys (superalloys) of this type, such as for example Inconel, are considerably more expensive (for example ten times more expensive) than standard steels..

Suitable nickel-base alloys for applications of this type may be alloyed with Nb in order to acquire the required resistance to creep. An Nb-containing nickel-base alloy of this type is known, for example, under the name Inconel® (IN) 625 or Inconel 718. Parts which consist of alloys of this type can easily be joined together by welding.

For steam power plant operating at temperatures in excess of approx. 620°C, pipes carrying live steam and reheat steam from the boiler to the valves located before the high and intermediate pressure turbines are manufactured of nickel alloys. These may be of solid solution strengthened (SS) alloys such as IN617 or IN625 for temperatures up to about 750°C or of precipitation-strengthened (PS) alloys such as C263, IN182, for temperatures typically >750°C.

However the existing solutions proposed for live steam pipes or reheat pipes are expensive due to the inherent cost per kg of nickel compared with iron, the higher manufacturing costs of forging of billet of nickel alloy, piercing, machining of inner and outer surfaces of resulting thick-walled pipes, welding and the greater complexity of nondestructive examination of structures made from Ni-base alloys.

In view of the prior art it is seen as an object of the present invention to provide a new method of manufacturing pipes for live and reheat steam of Ni-base alloys.

### Summary

According to an aspect of the present invention, there is provided method of manufacturing live steam pipes or reheat pipes for a steam power plant, including the steps of rolling a billet of a Ni.base alloy into a flat sheet, bending the sheet into a tube and welding together the longitudinal confronting edges of the sheet to form a pipe sufficiently long-term corrosion resistant and creep-resistant under exposure to steam above a temperature of 650° C.

A Nickel base alloy has a nickel content of at least 50%.

Preferably the resulting pipe is long-term corrosion resistant and creep-resistant to exposure to steam above a temperature of 700° C.

In a preferred variant the pipe is reinforced by reinforcing rings, which can be half rings with bolts or shrink rings.

In another preferred variant the pipe is joined at at least one end with Ni-based forged connector elements such as elbow elements, couplers and the like.

The above and further aspects of the invention will be apparent from the following detailed description and drawings as listed below.

### Brief Description of the Drawings

Exemplary embodiments of the invention will now be described, with reference to the accompanying drawings, in which:
FIG. 1 is a schematic diagram of steam power plant with live steam pipes and first reheat pipes;
FIG. 2A shows Ni-base billet rolled into a rectangular shape;
FIG. 2B shows a welded pipe of Ni-base material;
FIG. 3 shows a welded pipe of Ni-base material with reinforcement; and
FIG. 4 shows a welded pipe of Ni-base material joined with an elbow section of Ni-base material.

### Detailed Description

Aspects and details of examples of the present invention are described in further details in the following description. Exemplary embodiments of the present invention are described with references to the drawings, wherein like reference numerals are used to refer to like elements throughout. In the following description, for purposes of explanation, numerous specific details are set forth to provide a thorough understanding of the invention. However, the present invention may be practiced without these specific details, and is not limited to the exemplary embodiments disclosed herein

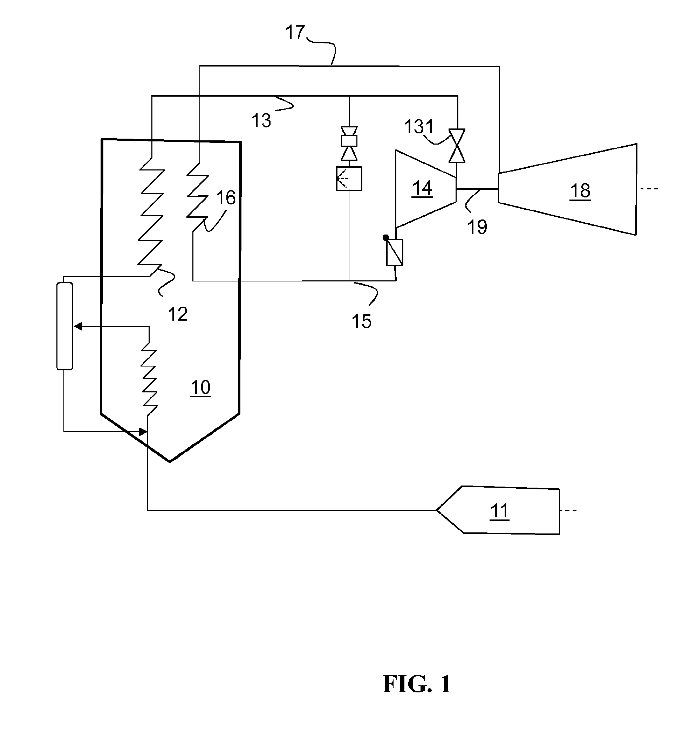

Fig. 1 shows a schematic diagram of a section of a steam power plant designed to provide power to a public power grid. The steam is generated in a boiler **10.** The boiler **10** receives water from condenser (not shown) or a source external to the plant. The water passes through a feed water preheater **11** as shown before entering the boiler. The boiler **10** can be fired directly by fossil fuels such as coal or gas or by a non-convention heat source in form of a secondary heat exchange cycle or as is otherwise known in the industry.

The live steam is generated within a cascade of heat exchangers **12** before exiting the boiler into the feed pipe **13** for the live steam. The feed pipe **13** directs the steam into the inlet of a first turbine **14,** which is in this example a high-pressure (HP) turbine within several stages of turbines. The main steam valve **131** controls the amount of steam entering the HP turbine **14.** At the exit of the HP turbine the partially expanded steam is returned in the cold reheat (CRH) line **15** to the inlet of a reheater **16.** Within the reheater **16** the partially expanded steam is heated using the heat generated by the boiler **10.**

The reheat outlet (RHO) is connected through the reheater outlet line **17** with the inlet of a second turbine **18,** which is in this example an intermediate-pressure (IP) turbine within several stages of turbines. The turbines share a single rotor **19** which drives a generator (not shown). Further turbine stages may include additional IP turbines or one or more low pressure (LP) turbines with or without additional reheating circuits.

The pipes for the feed pipe **13** and the reheater outlet line **17** in an ultra-supercritical (USC) steam power can be regularly exposed to steam at temperatures above 700° C. Chrome-based steels and steel alloys with a Ni content of less than 50 per cent are typically not suitable to withstand temperatures at this level. Even though some of these alloys have a short-term ability to maintain their integrity at such temperature, long-term creep particularly in welded seams make them unsuitable for use as steam supply pipes.

An example of manufacturing a pipe for a live steam feed pipe or a reheater outlet line for USC power plants is illustrated in the following drawings.

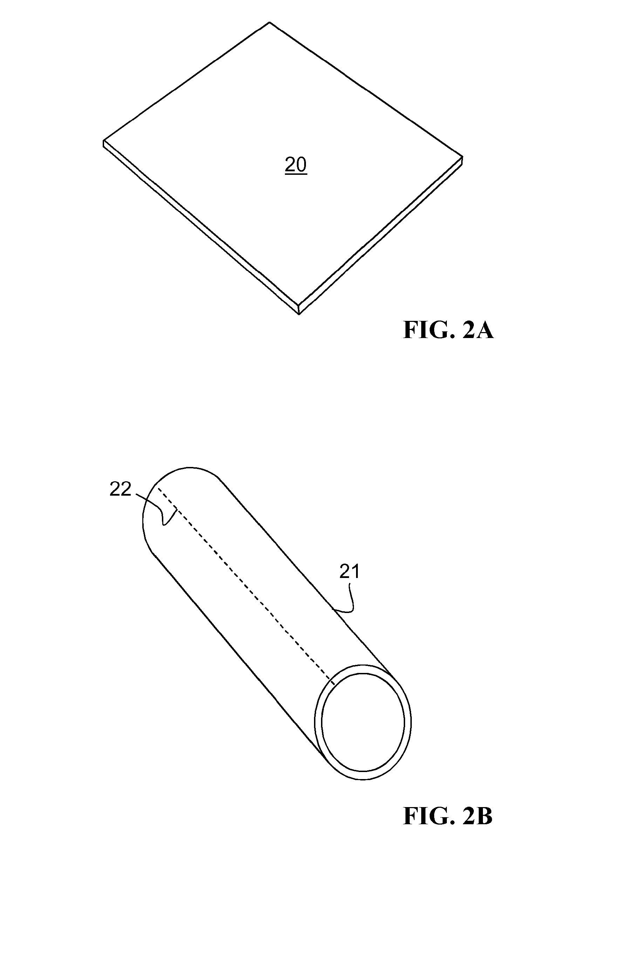

The flat plate **20** of FIG. 2A is produced from a billet of a high Ni content alloy such as IN 617 with a weight % composition of Cr 20.0 - 24.0, Mo 8.0 - 10.0, Fe 3.0 max, S 0.05 - 0.15, C.015 max, Mn 0.50 max, B0.006, Cu 0.50, Ti max 0.60, Co 10.0 - 15.0, P 015 max, Si 0.50 max, and Al 0.80 - 1.50 with Ni forming the balance or IN 718 with a composition of Ni 52.50, Co 1.00, Cr 19.00, Mo 3.05, Fe 17.00, Si 0.35, Mn 0.35, C 0.080, Al 0.600, Ti 0.900, Cu 0.30, P 0.015, B 0.006, S 0.015, and Nb+Ta 5.125.

The billet is rolled and shaped into a sheet **20** matching the dimensions of the pipe to be produced. Then the surface is machined and cleaned before the sheet is bent lengthwise into a pipe **21** as shown in FIG. 2B. Following the step of bending the pipe-shaped sheet is heat treated at a temperature appropriate to reduce residual stresses.

After the heat treatment, the confronting longitudinal edges are welded together using a controlled automatic process known per se such as TIG welding, submerged arc welding, or electron beam welding, or by using manual metal arc (MMA) hand electrode welding. The welding may be performed in the solution-treated condition or under fully heat- treated condition, as appropriate.

As result of the welding step, the pipe has a longitudinal welding line **22,** which is long-term creep resistant.

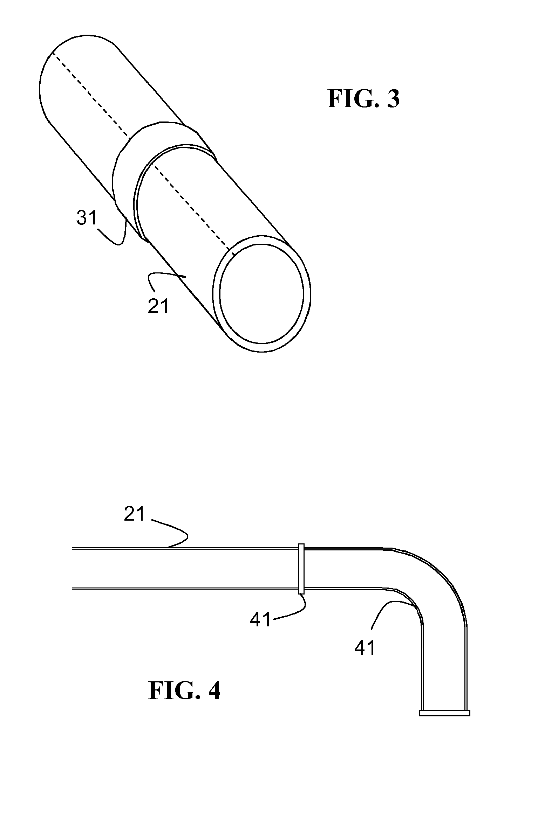

The pipe can be further reinforced by local external reinforcements such as rings or metal bands **31** as shown in the example of FIG. 3. Such rings or bands can be applied using a heat-shrinking process. Alternatively the rings and bands can be mounted as segments bolted or clamped onto the pipe.

In another example shown in FIG. 4, a pipe **40** manufactured according to any of the above examples is joint to an elbow section **41** made of NI-base material and manufactured using a conventional forging and milling process. The two parts **40, 41** are joined using a circumferential welding at a flange section **42.** The flange section itself can be split into parts which are welded to or formed at the appropriate end sections of the pipes to be joined.

The combination of Ni-base parts manufactured according to different processes are seen as advantageous for a technically safe but cost efficient pipe manufacturing process for a live steam feed pipe or a re-heater outlet line for USC power plants.

The present invention has been described above purely by way of example, and modifications can be made within the scope of the invention, particularly as relating to the manner and parts joined to form a pipe and connectors suitable for a desired geometry and steam path between boilers and turbines.

The invention may also comprise any individual features described or implicit herein or shown or implicit in the drawings or any combination of any such features or any generalization of any such features or combination, which extends to equivalents thereof. The breadth and scope of the present invention should not be limited by any of the above-described exemplary embodiments.

Each feature disclosed in the specification, including the drawings, may be replaced by alternative features serving the same, equivalent or similar purposes, unless expressly stated otherwise.

Unless explicitly stated herein, any discussion of the prior art throughout the specification is not an admission that such prior art is widely known or forms part of the common general knowledge in the field.

### LIST OF REFERENCE SIGNS AND NUMERALS

boiler **10**
feed water preheater **11**
heat exchangers **12**
feed pipe **13**
main steam valve **131**
first (HP) turbine **14**
cold reheat (CRH) line **15**
reheater **16**
reheater outlet line **17**
second (IP) turbine **18**
rotor **19**
sheet **20**
pipe **21**
welding line **22**
band **31**
elbow section **41**
flange section **42**

## Claims

1. A method of manufacturing live steam pipes or reheat pipes for a steam power plant, including the steps of forming a billet of a Ni.base alloy into a flat sheet, bending the sheet into a tube and welding together the longitudinal confronting edges of the sheet to form a pipe sufficiently long-term corrosion resistant and creep-resistant under exposure to steam above a temperature of 650° C.

2. The method of claim 1 using a billet made of a Nickel base alloy with a nickel content of at least 50%.

3. The method of claim 1 wherein the pipe is sufficiently long-term corrosion resistant and creep-resistant under exposure to steam above a temperature of 700° C.

4. The method of claim 1 further including the step of reinforcing the pipe using reinforcing rings.

5. The method of claim 1 further including the step of joining the pipe at at least one end with Ni-based forged connector elements.

6. A pipe manufactured using the steps of forming a billet of a Ni.base alloy into a flat sheet, bending the sheet into a tube and welding together the longitudinal confronting edges of the sheet such that the pipe is sufficient long-term corrosion resistant and creep-resistant to exposure to steam above a temperature of 650° C.
